# EUROPEAN PATENT APPLICATION

(11) **EP 1 277 985 A2**
(43) Date of publication of application: **22.01.2003**
(21) Application number: 02077703.3
(22) Date of filing: 05.07.2002
(51) Int. Cl.: F16F 9/49

(54) **Hydraulic rebound cut-off for monotube damper**

(30) Priority: 20.07.2001 US 910569
(71) Applicant: Delphi Technologies, Inc., Troy, MI 48007 (US)
(72) Inventor: Lun, Saiman, Centerville, OH 45458 (US)
(74) Representative: Denton, Michael John

(57) **Abstract**

A rebound cut-off assembly for a motor vehicle suspension component comprises a rebound cut-off piston (15) and a disc (36). The rebound cut-off piston is disposed around a piston rod (16) of the suspension component. The disc is disposed around the piston rod and proximate the rebound cut-off piston. The disc has an outside diameter less than an inside diameter of a flask (30) of the suspension component to create a fluid path therebetween.

## Description

### TECHNICAL FIELD OF THE INVENTION

The present invention relates to monotube dampers, and more particularly to a hydraulic rebound cut-off for a monotube damper.

### BACKGROUND OF THE INVENTION

A damper operates in vehicle suspensions as a damping device controlling the sprung (body) and unsprung (wheels) masses of a vehicle by reducing loads or vertical accelerations normally transmitted from the wheels to the body. Damping is accomplished by converting kinetic energy into thermal energy and dissipating the heat. Conventionally, hydraulic dampers include a piston with a connected piston rod slidably carried in a fluid-filled tube and separating the tube into extension and compression chambers. A rod guide at the top end of the tube closes the extension chamber and slidably engages the piston rod. In many applications, the suspension damper is called upon to limit the full extension travel of the suspension system.

In some vehicle applications, mechanical rebound stops that are fixed to the piston rod and engagable with the rod guide are known to provide a means of limiting the maximum extension travel of the piston rod from the damper. A typical mechanical rebound stop is generally equipped with a resilient bumper made of material such as rubber or urethane. The bumper is designed to cushion the engagement of the damping piston with the rod guide at the end of damper travel in the extension direction. This type of a mechanical stop tends to result in somewhat of an abrupt means of limiting travel during rebound. It has also been found that in severe applications, a resilient bumper material may undesirably experience heat degradation when the bumper absorbs the entire rebound stop load.

Providing a hydraulic rebound cut-off (RCO) feature with a shock absorber form of damper is also known. Such a device is disclosed in U.S. Patent No. 3,621,949 which issued Nov. 23, 1971. That hydraulic RCO feature uses an axial rod flow path communicating fluid between the extension and compression chambers and operates as an additional damping flow path with the typical piston valve orifices. When the piston approaches full extension, the axial rod flow path is closed by the rod guide, significantly increasing damping force and slowing extension directed travel. This prior art device undesirably necessitates changes to the rod guide to prevent blow-by of hydraulic fluid caused by high pressure which builds in the lower entrance segment of the rod guide and requires a larger rod I.D. for sufficient flow capacity.

Yet another type of known hydraulic RCO feature utilizes an RCO piston in conjunction with the damping piston. Such a device is described in U.S. Patent No. 3,007,550 which issued Nov. 7, 1961. According to this prior art design, a fixed/clamped disc or disc stack on a secondary or RCO piston coacts with the damping piston to effect a substantial entrapment of fluid in the extension chamber of the shock absorber as the damping piston approaches full rebound. U.S. Patent No. 6,209,691, the disclosure of which is hereby incorporated by reference, shows a suspension damper with a self-aligning RCO. Still another RCO design has an RCO sleeve assembled at the top of the cylinder tube under the closing system. It uses an RCO piston with by-pass holes, an RCO blow-off valve that prevents fluid flow through the RCO piston when it enters the RCO sleeve, and an RCO retainer to prevent the RCO blow-off valve from over-stressing when fluid flows through the by-pass holes in jounce. The RCO piston, the RCO blow-off valve, and the RCO retainer are assembled onto the rod tenon above the piston and valve assembly.

A problem with these designs is that it is difficult or impossible to tune them for the RCO load in rebound and in jounce.

### SUMMARY OF THE INVENTION

The present invention is a rebound cut-off assembly for a motor vehicle suspension component. The rebound cut-off assembly comprises a rebound cut-off piston disposed around a piston rod of the suspension component, and a disc disposed around the piston rod and proximate the rebound cut-off piston. The disc has an outside diameter less than an inside diameter of a flask of the suspension component to create a fluid path therebetween.

Accordingly, it is an object of the present invention to provide a rebound cut-off assembly of the type described above which optimizes the vehicle ride comfort during a full suspension rebound event.

Another object of the present invention is to provide a rebound cut-off of the type described above which is easily tunable.

These and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

**FIG. 1** is a cross-sectional view of a monotube damper according to the present invention including an RCO assembly; and
**FIG. 2** is a top view of an RCO disc for use with the RCO assembly.

### DETAILED DESCRIPTION OF THE PRESENTLY PREFERRED EMBODIMENTS

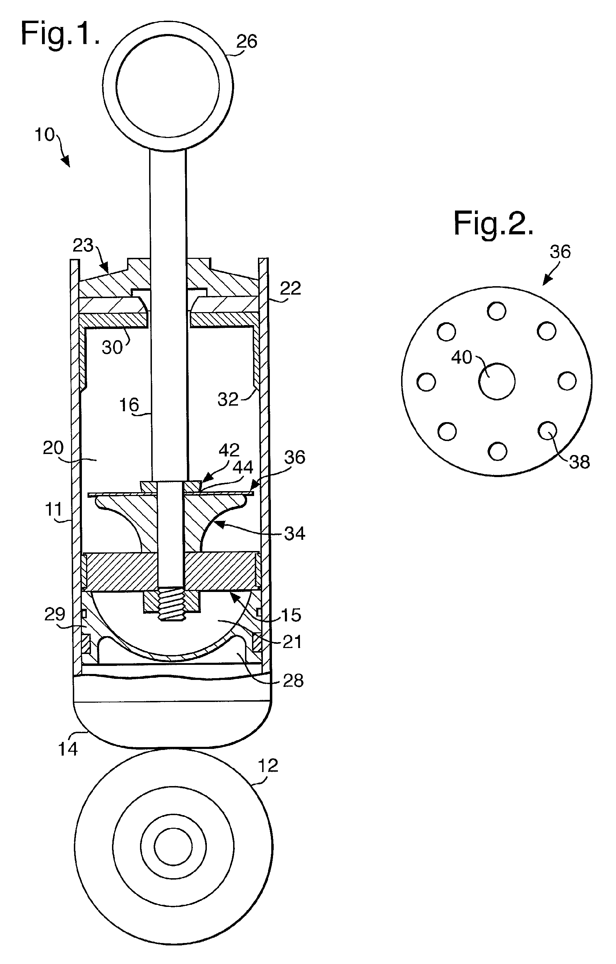

**FIG. 1** shows one embodiment of a suspension damper 10 according to the present invention for a motor vehicle. The damper 10 includes an elongated cylindrical tube 11 having an attachment fitting 12 secured thereto for connection to a wheel assembly (not illustrated) as the unsprung mass in the vehicle suspension system. The tube 11 is closed at its lower end by a base cup 14 which is secured thereto through conventional means such as welding, or is formed as an integral part thereof. The damper 10 includes a piston assembly 15 slidably mounted for reciprocal movement in the tube 11 and affixed to a piston rod 16. The piston assembly 15 hydraulically separates the interior of tube 11 into expansible and contractible working chambers designated as extension chamber 20 and compression chamber 21.

An upper end 22 of the tube 11 is in general provided with fastening devices such as snap rings and grooves, or is otherwise formed to securely carry a rod guide assembly 23. The piston rod 16 extends through the extension chamber 20 and rod guide assembly 23, and exits the tube 11. The piston rod 16 may also include an annular shoulder that carries a generally cylindrical dust tube assembly which extends down over the tube 11. An attachment fitting 26 is threaded onto or otherwise suitably engaged with the end of the piston rod 16. The attachment fitting 26 is provided for attachment to the body of the vehicle (not illustrated) as the sprung mass of the suspension system. In response to relative movement between the wheel assembly and the vehicle, the damping piston assembly 15 reciprocally moves within the tube 11.

Oil carried in the tube 11 provides a damping medium for the damper 10. During a compression stroke, as the piston assembly 15 slides downward in the tube 11, an increasing volumetric amount of the piston rod 16 enters the tube 11 through the rod guide assembly 23. To accommodate this increased volume, a compressible gas charge is carried within a compensation chamber 28 which is separated from the compression chamber 21 by a reciprocal gas cup assembly 29. As the increasing amount of the piston rod 16 enters the tube 11 during the compression stroke, the gas within the compensation chamber 28 is compressed as the gas cup assembly 29 slides downward in response to displacement of the noncompressible hydraulic fluid carried within the compression chamber 21 and extension chamber 20.

An RCO flask 30 is fixed against an annular static seal proximate the rod guide assembly 23, and is maintained in position by a snap ring that engages the tube 11. The RCO flask 30 extends axially toward the piston assembly 15 and ends with a chamfered inner face 32 as shown. The flask 30 is formed as a metal stamping or a machined part. An RCO piston 34 supports an RCO disc 36.

**FIG. 2** shows the RCO disc 36, which has an annular body with a plurality of fluid apertures 38 spaced circumferentially and extending therethrough to allow fluid flow through the disc. A center hole 40 is also provided in the disc 36 through which a reduced diameter portion of the piston rod 16 may pass. A washer 42 is provided around the top of the reduced diameter portion of the piston rod 16 and above the RCO disc 36.

The RCO disc 36 has an outer diameter which is sized to create a small gap between it and the inside diameter of the flask 30. In operation of the damper 10, the RCO effect is generated when the RCO disc 36 passes proximate the chamfered edge 32 of the RCO flask 30 and partially traps the hydraulic fluid. The small gap between the outside diameter of the RCO disc 36 and the RCO flask 30 generates a relatively high damping load to dissipate energy. When the shock returns off of the RCO flask 30, the RCO disc 36 deflects around the washer 42, which is provided with a rounded outer edge 44 to minimize stress points on the RCO disc. When the RCO disc 36 is deflected, a relatively larger fluid path is created between the outside diameter of the RCO disc and the RCO flask 30, and through the holes 38 on the RCO disc, to reduce damping loads while the suspension returns to jounce.

Different vehicle sizes and suspension linkage ratios require different levels of load generated by the RCO assembly. In order to optimize the vehicle ride comfort during a full suspension rebound event, the damping load of the present invention as a function of displacement can be easily tuned. By increasing the diameter of the RCO disc, the gap between the RCO disc and the RCO flask is correspondingly reduced, which increases the damping load of the RCO assembly. Similarly, a thinner RCO disc will deflect more quickly to reduce jounce load within the RCO assembly. The number, size and location of the holes 38 in the RCO disc can likewise be varied to affect the performance of the suspension damper.

While the embodiment of the invention disclosed herein is presently considered to be preferred, various changes and modifications can be made without departing from the spirit and scope of the invention. The scope of the invention is indicated in the appended claims, and all changes that come within the meaning and range of equivalents are intended to be embraced therein.

## Claims

1. A rebound cut-off assembly for a motor vehicle suspension component having a piston rod and a flask, the rebound cut-off assembly comprising:
a rebound cut-off piston disposed around the piston rod; and
a disc disposed around the piston rod and proximate the rebound cut-off piston, the disc having an outside diameter less than an inside diameter of the flask to create a fluid path therebetween.

2. The rebound cut-off assembly of claim 1 further comprising:
a retainer for retaining the disc against the rebound cut-off piston.

3. The rebound cut-off assembly of claim 2 wherein the retainer comprises a washer.

4. The rebound cut-off assembly of claim 2 wherein the retainer has a rounded edge.

5. The rebound cut-off assembly of claim 2 wherein the retainer has a rounded edge disposed adjacent the disc.

6. The rebound cut-off assembly of claim 1 wherein the disc is relatively flexible.

7. The rebound cut-off assembly of claim 1 wherein the disc has at least one hole therethrough.

8. The rebound cut-off assembly of claim 1 wherein the disc has a center hole and at least one additional hole therethrough to create a fluid path.

9. A suspension component for a motor vehicle, the suspension component comprising:
a flask;
a piston rod slidable relative to the flask;
a rebound cut-off piston disposed around the piston rod; and
a disc disposed around the piston rod and proximate the rebound cut-off piston, the disc having an outside diameter less than an inside diameter of the flask to create a fluid path therebetween.

10. The rebound cut-off assembly of claim 9 further comprising:
a retainer for retaining the disc against the rebound cut-off piston.

11. The rebound cut-off assembly of claim 10 wherein the retainer comprises a washer.

12. The rebound cut-off assembly of claim 10 wherein the retainer has a rounded edge.

13. The rebound cut-off assembly of claim 10 wherein the retainer has a rounded edge disposed adjacent the disc.

14. The rebound cut-off assembly of claim 9 wherein the disc is relatively flexible.

15. The rebound cut-off assembly of claim 9 wherein the disc has at least one hole therethrough.

16. The rebound cut-off assembly of claim 9 wherein the disc has a center hole and at least one additional hole therethrough to create a fluid path.

17. A suspension component for a motor vehicle, the suspension component comprising:
a flask;
a piston rod slidable relative to the flask;
a rebound cut-off piston disposed around the piston rod;
a disc disposed around the piston rod and proximate the rebound cut-off piston, the disc having an outside diameter less than an inside diameter of the flask to create a fluid path therebetween; and
a retainer for retaining the disc against the rebound cut-off piston.

18. The rebound cut-off assembly of claim 17 wherein the retainer has a rounded edge disposed adjacent the disc.

19. The rebound cut-off assembly of claim 17 wherein the disc is relatively flexible.

20. The rebound cut-off assembly of claim 17 wherein the disc has a center hole and at least one additional hole therethrough to create a fluid path.
